# EUROPÄISCHE PATENTANMELDUNG

(11) **EP 1 225 462 A2**
(43) Veröffentlichungstag der Anmeldung: **24.07.2002**
(21) Anmeldenummer: 01130154.6
(22) Anmeldetag: 19.12.2001
(51) Int. Cl.: G02B 6/38

(54) **Optischer Steckverbinder**

(30) Priorität: 17.01.2001 DE 10101812
(71) Anmelder: Harting Automotive GmbH & Co. KG, 32339 Espelkamp (DE)
(72) Erfinder: Bruland, Alexander, 32369 Rahden (DE); Essrich, Wolfgang, 40724 Hilden (DE); Tickle, Graham, Stamford, Lincolnshire PE92GL (GB)

(57) **Zusammenfassung**

Für frei verlegbare Lichtwellenleiterverbindungen zur Übertragung optischer Signale wird entsprechend den von der "MOST" (Media Oriented Systems Transport) genannten Kooperation von Automobilhersteller vorgegebenen Abmaßen ein lösbar ausgebildeter optischer Steckverbinder zum Aufbau von modularen Steckverbindungssystemen vorgeschlagen, der aus zwei (10,20) ineinander einfügbaren Gehäuseteilen besteht. Dabei ist in einem umgebenden Gehäuse ein Halterungsteil (10) eingefügt, dass mit Faserendhülsen (3,31) versehene Lichtwellenleiter (4) aufnimmt, wobei die Faserendhülsen mit einer Referenzfläche versehen sind.

Beim Zusammenfügen der Steckverbinder mit einem entsprechenden Gegenstecker (2) gelangen die Referenzflächen der beiden Faserendhülsen (31,51) in direkten Kontakt, wobei die Stirnflächen der Lichtwellenleiter ein definierter Abstand (C) für eine optimierte Signalübertragung aufweisen.

## Beschreibung

Die Erfindung betrifft einen optischen Steckverbinder mit in Faserendhülsen gehaltenen Lichtwellenleitern, zur steckbaren Verbindung mit einem Gegenstecker.

Optische Steckverbinder werden zur mechanischen und optischen Verbindung von Lichtwellenleitern für eine störunanfällige Übertragung von analogen und/oder digitalen Signalen bei hohen Datenübertragungsgeschwindigkeiten im Kommunikationstechnikbereich benötigt.

Es ist bekannt, Lichtwellenleiter mit Stecker und Gegenstecker, bzw. mit einer aufwendigen Kombination aus Stecker - Kupplung - Stecker miteinander zu verbinden.

Aus der US 6,102,581 ist ein optischer Adapter mit zusammensteckbaren Ferrulen gezeigt, bei dem Ferrulen zur Ankopplung von Lichtwellenleitern in speziell gefertigten Ferrulengehäusen gehalten sind, die wiederum in einem Adaptergehäuse zusammengesteckt werden, wobei größenverschiedene Ferrulen miteinander kombinierbar sind.

Weiterhin ist aus der US 5,574,812 eine Halterung für optische Steckverbinder bekannt, bei der zwei getrennte optische Steckverbinder in einer Halterung verrastbar zusammengefaßt sind.

Dabei sind bei den bekannten optischen Steckverbindern für eine korrekte Steckung bei minimaler Signaldämpfung die Anordnung der Faserendhülsen und deren Halterung in einem Steckgehäuse exakt aufeinander abzustimmen, wobei sowohl die Fehlertoleranzen des Steckverbindergehäuses wie auch der Faserendhülsen bei der Fertigung zu berücksichtigen sind.

Der Erfindung liegt daher die Aufgabe zugrunde, einen optischen Steckverbinder der eingangs genannten Art dahingehend auszubilden, die für eine optimale Signalübertragung erforderlichen Fehlertoleranzen bei der Anordnung von mit Lichtwellenleitern versehenen Fasernendhülsen in einem Steckgehäuse und in einem Gegenstecker auf ein Mindestmaß zu reduzieren.

Diese Aufgabe wird dadurch gelöst, dass der Steckverbinder ein Halterungsteil für mindestens einen in einer Faserendhülse gehaltenen Lichtwellenleiter aufweist, dass die Faserendhülse eine durch einen Bund gebildete Referenzfläche mit einem definierten Abstand zwischen der Referenzfläche und einer Stirnfläche, die der Lichtaustrittsfläche des Lichtwellenleiters entspricht, aufweist, und dass beim Zusammenstecken des Steckverbinders mit einem Gegenstecker, die Referenzfläche an eine Referenzfläche einer Faserendhülse des Gegensteckers zur Anlage gelangt, wobei die Stirnflächen der Faserendhülsen einen definierten Abstand aufweisen.

Die mit der Erfindung erzielten Vorteile bestehen zunächst darin, dass die äußere Ausführung und das Steckgesicht des optischen Steckverbinders den Abmaßen entspricht, welches von den Automobilherstellern in der sog. MOST-Kooperation (MOST = Media Oriented Systems Transport) festgelegt wurde, mit diesem kompatibel ist, dazu jedoch kostengünstiger herzustellen und bei der Montage einfacher zu handhaben ist.
Ein weiter Vorteil liegt in der Verwendung von mit Faserendhülsen versehenen Lichtwellenleiter, die mechanische Kodiermittel für einen unverwechselbaren Einbau im Steckverbinder aufweisen. Damit ist eine fehlerhafte Stekkung ausgeschlossen, die zu einer Funktionsunfähigkeit oder u. U. einer Zerstörung elektrischer Bauteile führen kann.
Weiterhin entfällt eine zusätzliche Zugentlastung der Lichtwellenleiter über das Gehäuse, da die Faserendhülsen direkt auf die Faser und zusätzlich auf den Mantel gecrimpt werden und somit die Zugkräfte zunächst auf die Faserendhülsen geleitet werden und dann erst auf das Steckverbindergehäuse. Wobei das hier vorteilhaft angewandte Grundprinzip eines in einem Gehäuse gelagerten Rotationskörpers zur Halterung eines Lichtwellenleiters ohne weiteres auch auf ähnliche Varianten, z. B. mit einem elektrischen Leiter übertragbar ist.
Ein wesentlicher Vorteil liegt jedoch in der Kopplung der Faserendhülsen gegeneinander, wobei durch einen Bund auf der Faserendhülse gebildete Referenzflächen der beiden Faserendhülsen zur gegenseitigen Anlage gelangen.
Durch die exakte Bearbeitung der metallischen Faserendhülsen sind genaue Abstände zwischen den Referenzflächen und den Stirnflächen der Faserenden und damit der Lichtwellenleiter gewährleistet, die ermöglichen, dass ein definierter Abstand zwischen den Stirnflächen, unabhängig von der Geometrie des umgebenden Gehäuses bzw. dessen Tolleranzmaße, eingehalten wird.
Somit entfallen bezüglich der Signalübertragungsdämpfung die üblicherweise zusätzlich mit in die Fehlerbetrachtung eingehenden Maßtoleranzen des Steckgehäuses.
Dabei sind die Faserendhülsen im Gegenstecker zusätzlich mit einer Druckfeder versehen, die einen ständigen axialen Andruck der beiden Faserendhülsen gegeneinander bewirkt.
Aufgrund der erforderlichen Fertigung von nur zwei Bauteilen, einem Halterungsteil für die mit Faserendhülsen versehenen Lichtwellenleiter und einem Gehäuse in Kunststoff-Spritztechnik ist eine kostengünstige Fertigung derartiger optischer Steckverbinder möglich.
Vorteilhafterweise werden die mit Kodiermitteln versehenen Faserendhülsen, das sind hier aus dem zylindrischen Drehteil des Hülsenkörpers vorstehende Bereiche, in entsprechend ausgeführte, negativ ausgeformte Kammern des Halterungsteiles unverwechselbar eingelegt und gleichzeitig durch die Formgebung der Kammern in selbigen gehalten.
Weiterhin ist von Vorteil, dass das Halterungsteil mit den eingefügten Faserendhülsen bereits als Steckverbinder genutzt werden kann, je nach Anwendungsbereich aber auch mit einem Gehäuse versehen sein kann.
Wird ein zusätzliches Gehäuse genutzt, so werden bei einer Montage oder einer Konfektionierung des Steckverbinders, die bereits vorteilhafterweise vorverrasteten Teile von Halterungsteil und Gehäuse einstückig geliefert und lediglich durch ein Einfügen der mit Lichtwellenleitern versehenen Faserendhülsen komplettiert und endgültig durch ein weiteres Ineinanderschieben miteinander verrastet.
Durch die Anformung von zwei im Abstand hintereinander angeordneter Rastnasen auf jeder Seite des Halterungsteiles, wird bei der Montage zunächst mit dem Einrasten der ersten Rastnase in der Ausnehmung eine Vorverrastung erzielt, womit die beiden Gehäuse zunächst locker zusammengehalten werden. Erst nach dem Verrasten des zweiten Rastnasenpaares in den Ausnehmungen ist das Halterungsteil hörbar mit dem Gehäuse verrastet.
Eine weitere sichernde Verrastung ist abklappbar am Gehäuse angeformt.
Dabei wird diese Verrastung durch einen vorgesehenen Klappmechanismus mittels eines Federelementes vorteilhafterweise in seiner Ruhestellung offengehalten, so dass die Faserendhülsen problemlos in das Halterungsteil eingefügt werden können.

Ein Ausführungsbeispiel der Erfindung ist in der Zeichnung dargestellt und wird im folgenden näher erläutert. Es zeigen:
- Fig. 1: eine perspektivische Ansicht eines optischen Steckverbinders,
- Fig. 2a: eine Draufsicht auf ein Halterungsteil des Steckverbinders,
- Fig. 2b: eine Seitenansicht des Halterungsteiles auf die Einführseite für Lichtwellenleiter,
- Fig. 3a: eine Seitenansicht des Gehäuses mit geöffnetem Verrastungsmittel,
- Fig. 3b: eine Ansicht des Gehäuses auf die Einführseite für das Halterungsteil,
- Fig. 4: eine Draufsicht auf einen Steckverbinder mit Faserendhülsen,
- Fig. 5a: vereinfachte Schnittdarstellung von einem auseinandergezogenen optischen Steckverbinder und einem Gegenstecker,
- Fig. 5b: vereinfachte Schnittdarstellung von einem gesteckten optischen Steckverbinder und einem Gegenstecker, und
- Fig. 6: eine auseinandergezogene, perspektivische Ansicht auf den optischen Steckverbinder.

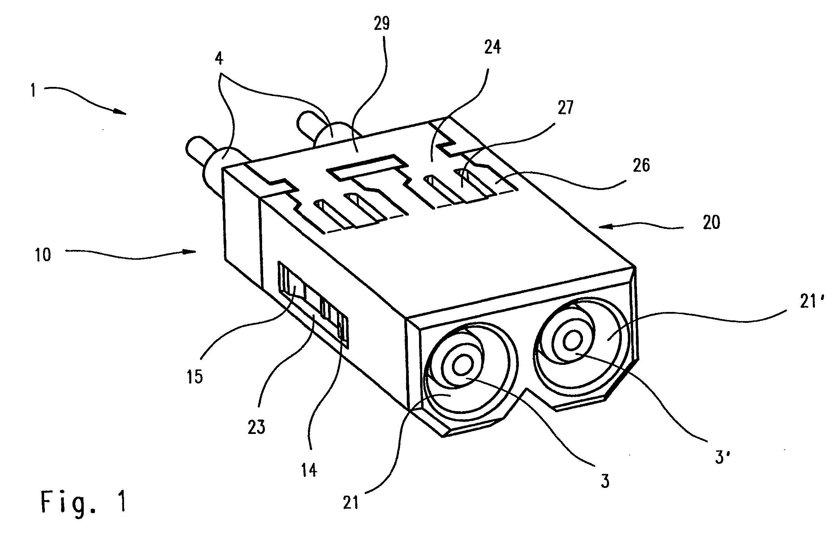

In der Fig. 1 ist in einer perspektivischen Ansicht ein montierter Steckverbinder 1 mit einem umgebenden Gehäuse 20 und einem darin eingefügten Halterungsteil 10 gezeigt, bei dem das Steckgesicht des Steckgehäuses rundum an den Außenkanten mit Fasen versehenen ist, die ein einfaches Einschieben in einen Gegenstecker gewährleisten.
Innerhalb des Steckgesichtes sind in zwei zylindrischen Ausnehmungen Faserendhülsen 3, 3' mit darin gehaltenen Lichtwellenleitern 4 erkennbar.

In der Fig. 2a ist in einer Draufsicht das Halterungsteil 10 des optischen Steckverbinders dargestellt.
Das Halterungsteil besteht aus einer Schalenkonstruktion die aus zwei nebeneinander liegenden, länglichen und beidseitig auch nach oben offenen Kammern (11, 11') gebildet wird.

Die Innenmaße der unterschiedlich geformten Kammern entsprechen als Negativform den darin einzusetzenden Faserendhülsen (3, 3'), sind aber so bemessen, dass beim Einfügen der Faserendhülsen eine Preßwirkung auf diese ausgeübt wird, um eine selbsttätige Halterung der Faserendhülsen in den Kammern zu bewirken.
Weiterhin sind in den Kammern 11, 11' in Abstimmung mit den Faserendhülsen Kodiermittel vorgesehen, die in Form von vorstehenden quer zur Steckrichtung angeformter Rippen 13, 13' ausgebildet sind, die eine fehlerfreie Montage der Faserendhülsen gewährleisten.
An den äußeren Seitenwänden des Halterungsteiles 10 sind beidseitig mehrere Rastnasen 14, 15 vorgesehen, die jeweils in eine entsprechende Ausnehmung 23 am Gehäuse 20 einrasten und insgesamt ein erstes Rastmittel bilden.
Eine einzelne im Kantenbereich einer Seitenwand angeformte Rastnase 16 ist zur Verrastung des fertig montierten Steckverbinders mit einem hier nicht gezeigten Gegenstecker vorgesehen.
In der Mitte des Halterungsteiles ist zwischen den beiden Kammern 11, 11' ein von der Steckseite ausgehender, mindestens die Hälfte der Gehäuselänge umfassender Schlitz 12 vorgesehen, in den eine Zwischenwand 22 des Gehäuses 20 bei der Montage des Steckverbinders eintaucht.

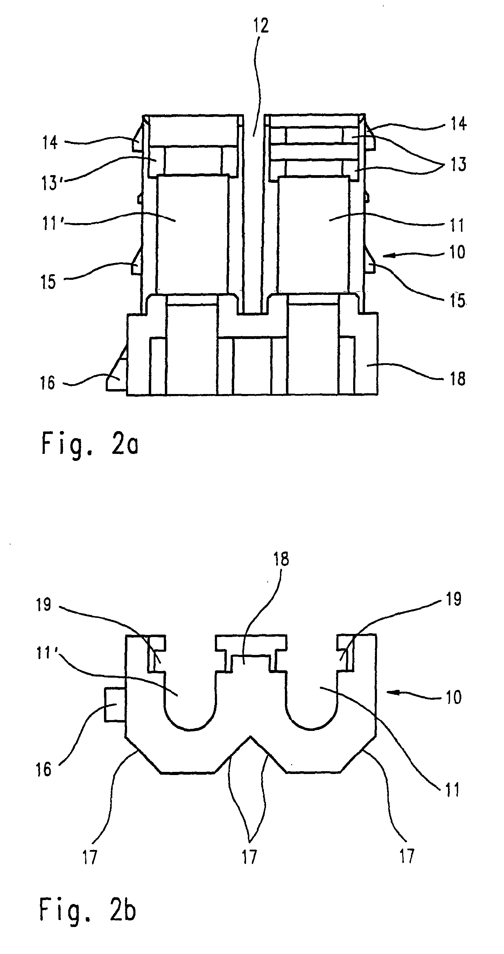

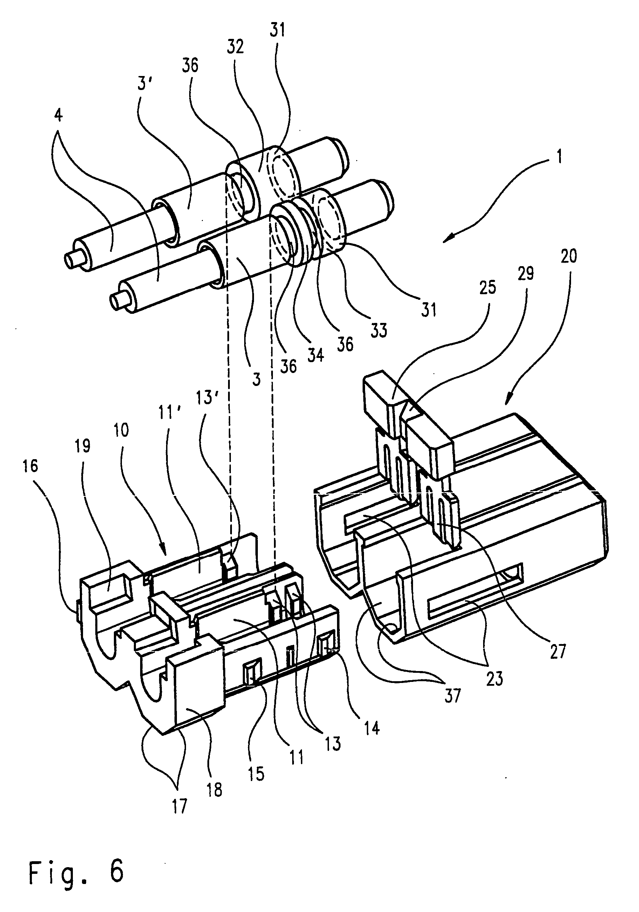

Die Fig. 2b zeigt das Halterungsteil 10 mit Sicht auf die Einführseite 18 für die Lichtwellenleiter.
Die Außenkonturen dieses Bereiches 18 sind abgesetzt vom vorderen Steckbereich (wie auch aus Fig. 6 ersichtlich) mit einer dickeren Wandung, in Höhe und Breite vergrößert, ausgeführt, da dieser Bereich beim Zusammenfügen mit dem Gehäuse 20 an dessen Wandung anstößt und insofern übergangslos die gleichen Außenmaße aufweist wie das Gehäuse.
Beidseitig unterhalb der Kammern 11, 11' sind an der Außenwand des Halterungsteiles symmetrisch angeordnete 45° Schrägen 17 als Polarisationsmittel vorgesehen, die zum unverwechselbaren Stecken mit dem Gehäuse 20 dienen, gleichzeitig aber auch als Positionierungsmittel beim Stecken mit dem hier nicht gezeigten Gegenstecker erforderlich sind.
In den Bereich der Ausnehmungen 19 taucht zum endgültigen Verrasten von Halterungsteil 10 und Gehäuse 20 ein zweites Rastmittel mit einem Verrastungsblock 25 ein. (Siehe Fig. 6)

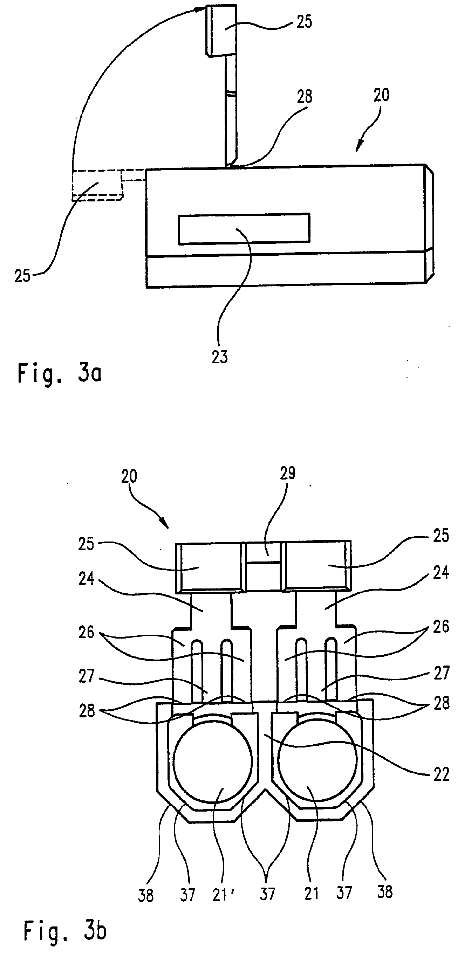

Die Fig. 3a zeigt in einer Seitenansicht das Gehäuse 20 mit einem um etwa 90° aufgeklappten zweiten Rastmittel mit dem Verrastungsblock 25.
An der Seitenfläche ist eine beidseitig des Gehäuses vorgesehene rechtekkige Ausnehmung 23 zu erkennen, in die beim Zusammenschieben von Halterungsteil 10 und Gehäuse 20 zunächst das Rastnasenpaar 14 eingeschoben wird, so dass Halterungsteil und Gehäuse zunächst vorverrastet sind. Beim weiteren Einschieben bis zum Anschlag der beiden Teile 10, 20 rastet das zweite Rastnasenpaar 15 hörbar ein.

In der Fig. 3b ist das Gehäuse 20 mit einer Ansicht auf die Einführseite für das Halterungsteil 10 dargestellt.
Das Gehäuse ist als rechteckiger Hohlkörper mit einer mittigen Längswand 22 versehen und weist zwei nebeneinander liegende, beidseitig offene Kammern 21, 21' auf.
Jeweils beidseitig unterhalb der Kammern sind um ca. 45° abgeschrägten Außenkonturen 38 zu erkennen, die in Zusammenwirken mit entsprechend geformten Gegenstücken eines hier nicht gezeigten Gegensteckers als Polarisierung gegen eine Fehlsteckung vorgesehen sind.
Weiterhin sind derartige Abschrägungen 37 gleichfalls innerhalb der beiden Kammern 21, 21' in der Einführseite für das Halterungsteil vorgesehen, in die die gleichartig geformten Schrägen 17 des Halterungsteiles 10 einfügbar sind.
Die Kammern 21, 21' sind im vorderen Steckbereich der Faserendhülsen wie bereits aus Fig. 1 ersichtlich, kreisförmig ausgeführt.
Oberhalb der beiden Kammern 21, 21' ist das als Doppelverrastung ausgebildetes zweite Rastmittel mit jeweils einem Verrastungsblock 25 vorgesehen, das aus der hier oben liegend gezeigten Wandung des Gehäuses 20 herausgeformt und mittels Filmscharnieren 28 gehalten ist.
Dabei ist für jede Kammer jeweils ein darüber angeordnetes und aufgrund der kleinen Abmaße mittels einer Querverbindung 29 zusammengehaltenes Rastmittel mit einem Verrastungsblock 25 vorgesehen, so dass zum Verrasten von Halterungsteil 10 und Steckgehäuse 20 nur eine Vorrichtung betätigt werden muß.
Insgesamt sind vier Stege 26 mit Filmscharnieren 28 vorgesehen, von denen jeweils zwei durch einen Verbindungssteg 24 miteinander verbunden sind, an dem wiederum jeweils ein Verrastungsblock 25 angefügt ist. Beide Verrastungsblöcke sind mittels der Querverbindung 29 miteinander verbunden. Zwischen den Stegen 26 ist jeweils ein Federelement 27 in Richtung auf die Kammern 21, 21' am Verbindungssteg 24 angeformt, dessen Ende nicht mit dem Gehäuse 20 verbunden ist, jedoch in seiner Länge über die Materialstärke des Gehäuses bis an Innenraum der beiden Kammern reicht.
Damit wird für dieses Rastmittel ein Klappmechanismus erzielt, der den Verrastungsblock 25 so lange in seiner offenen Ruhestellung hält, bis die Montage des Steckverbinders abgeschlossen ist, bzw. das Rastmittel bei Bedarf heruntergeklappt wird.

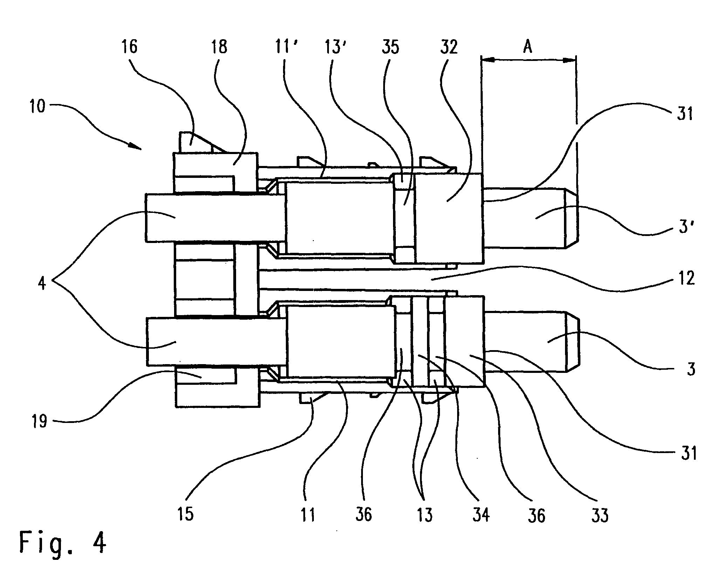

Die Fig. 4 zeigt in einer Draufsicht das Halterungsteil 10 und darin eingefügten Faserendhülsen 3, 3' mit darin wiederum gehaltenen Lichtwellenleitern 4. In dieser Version ist das Halteteil als eigenständiger Steckverbinder für höherpolige modular aufgebaute Systemsteckverbinder vorgesehen, bei denen das umgebende Gehäuse 20 um das Halterungsteil 10 entfällt.
Die beiden Faserendhülsen 3, 3' sind als metallische Hülsen ausgeführt und werden mittels eines Crimpvorganges direkt auf die Faser wie auch auf den Mantel der Lichtwellenleiter 4 aufgecrimpt.
Durch ein Herausformen von einem einfachen Bund 32 oder einem doppelten Bund 33, 34 aus der Rohform der Faserendhülsen 3, 3', sowie durch Ausnehmungen 35, 36, sind die Faserendhülsen mit einer mechanischen Kodierung versehen, die ein Einfügen nur in die dazu entsprechende Negativform ermöglicht.
Die entsprechende Negativform zu den Kodierungen ist in den beiden Kammern 11, 11' des Halterungsteiles 10 vorgesehen.
Dazu ist in der Kammer 11' im vorderen Steckbereich eine Querrippe 13' angeformt, in die nur die Ausnehmung 35 der Faserendhülse 3' eingefügt werden kann.
In der Kammer 11 sind im vorderen Steckbereich zwei Querrippen 13 angeformt, zwischen die nur die Faserendhülse 3 mit dem schmalen Bund 34 und den dazu beidseitigen Ausnehmungen 36 einfügbar ist.
An der Steckseite der Faserendhülsen sind die senkrecht zur Steckrichtung geformten Abschlußkanten von Bund 32 und 33 zu erkennen, die jeweils eine Referenzfläche 31 bilden, die einen definierten Abstand (A) von der Stirnfläche der Faserendhülsen aufweist.
Beim Zusammenfügen mit einem entsprechend geformten Gegenstecker, dessen Referenzfläche an die Referenzfläche 31 anstößt, wird ein definierter Abstand der Stirnflächen der beiden Faserendhülsen sichergestellt, so dass Fertigungstoleranzen der beiden die Faserendhülsen umgebenden Gehäuse eliminiert werden.

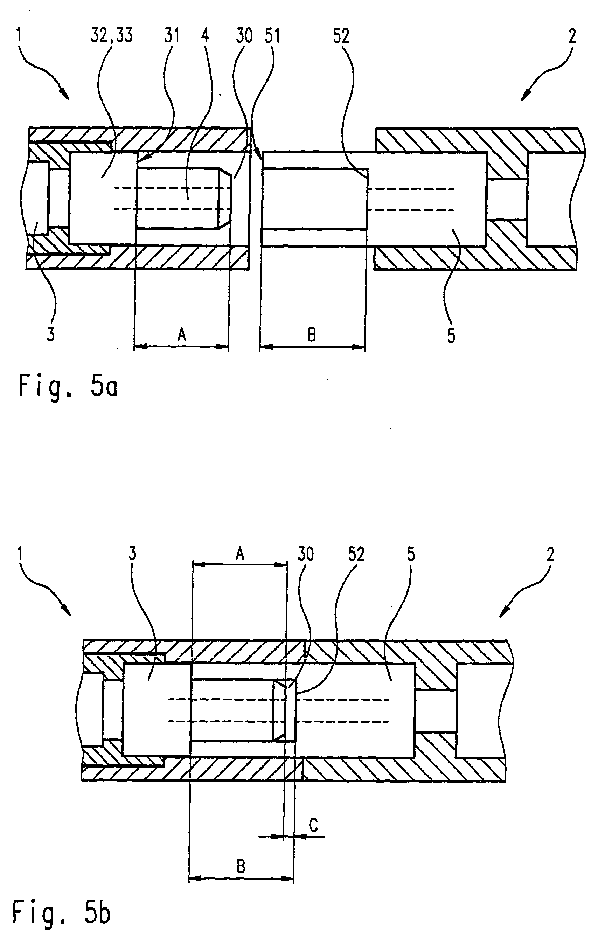

In den Fig. 5a, 5b ist das Prinzip eines minimierten Abstandes zwischen den Stirnflächen der Faserendhülsen und somit der Lichtwellenleiter gezeigt.
Die Fig. 5a zeigt in einer Schnittdarstellung die Faserendhülse 3 die innerhalb des Steckverbinders 1 gehalten ist, wobei die Faserendhülse von der Referenzfläche 31 bis zu ihrer außenliegenden Stirnfläche 30 und somit der Austrittsfläche des Lichtwellenleiters einen Abstand A aufweist.
Im Gegenstecker 2 ist eine entsprechend hülsenförmig ausgebildete Faserendhülse 5 gehalten, deren Referenzfläche 51 einen Abstand B zu ihrer innenliegenden Stirnfläche 52 des Lichtwellenleiters aufweist.
Werden die beiden Steckverbinder, wie in Fig. 5b gezeigt, zusammengesteckt, treffen unabhängig von den umgebenden Gehäusen, die beiden Referenzflächen 31, 51 direkt aufeinander, wobei zwischen den beiden Stirnflächen 30, 52 der Lichtwellenleiter 3, 5 jedoch ein definierter Abstand C bestehen bleibt, um eine optimale Signalübertragung zu gewährleisten.

Die Fig. 6 zeigt in einer perspektivischen und auseinandergezogenen Ansicht einen Steckverbinder mit den Bauteilen: Gehäuse 20, Halterungsteil 10, sowie den Faserendhülsen 3, 3' in denen die Lichtwellenleiter 4 gehalten sind.
Bei der Montage des Steckverbinders werden zunächst die mit den Lichtwellenleitern versehenen Faserendhülsen 3, 3' in die halboffenen Kammern 11, 11' eingefügt und dort durch eine entsprechende Maßhaltigkeit und Ausformung der Kammerwände eingeklemmt.
Anschließend wird das Halterungsteil 10 mit den Faserendhülsen in das Gehäuse 20 eingeschoben, wobei zunächst die Rastnase 14 in die Ausnehmung 23 einrastet und eine Vorverrastung zwischen Halterungsteil und Steckgehäuse bewirkt. Beim weiteren Einschieben gleitet die Rastnase 14 in der Ausnehmung weiter vor, bis die zweite Rastnase 15 ebenfalls in der Ausnehmung 23 verrastet.
Damit ist das Halterungsteil 10 formschlüssig bis zum Anschlag im Gehäuse 20 gehalten wobei sich der Bereich 18 oberflächengleich an die Außenkonturen des Gehäuses 20 anfügt.
Mit dem Abklappen des zweiten Rastmittels mit dem Verrastungsblock 25 sind Gehäuse 20 und Halterungsteil 10 endgültig - aber wieder lösbar - verrastet.
Als weitere Montageart ist vorgesehen, zunächst das Halterungsteil 10 mittels der Rastmittel aus Rastnase 14 und Ausnehmung 23 im Steckgehäuse 20 vorzuverrasten, dann die Faserendhülsen mit den Lichtwellenleitern in die Kammern 11, 11' des Halterungsteiles einzufügen, anschließend Halterungsteil und Gehäuse zusammenzuschieben und mit dem zweiten Rastmittel miteinander zu verrasten. Dies hat den Vorteil, dass zur Montage des optischen Steckverbinders, Halterungsteil und Steckgehäuse bereits als ein Teil geliefert werden und lediglich die Faserendhülsen eingefügt werden müssen.

## Patentansprüche

1. Optischer Steckverbinder mit in Faserendhülsen gehaltenen Lichtwellenleitern, zur steckbaren Verbindung mit einem Gegenstecker, **dadurch gekennzeichnet,**
**dass** der Steckverbinder (1) ein Halterungsteil (10) für mindestens einen in einer Faserendhülse (3, 3') gehaltenen Lichtwellenleiter (4) aufweist,
**dass** die Faserendhülse (3, 3') eine durch einen Bund (32, 33) gebildete Referenzfläche (31) mit einem definierten Abstand (A) zwischen der Referenzfläche (31) und einer Stirnfläche (30), die der Lichtaustrittsfläche des Lichtwellenleiters (4) entspricht, aufweist, und
**dass** beim Zusammenstecken des Steckverbinders (1) mit einem Gegenstecker (2), die Referenzfläche (31) an eine Referenzfläche (51) einer Faserendhülse (5) des Gegensteckers (2) zur Anlage gelangt, wobei die Stirnflächen (30, 52) der Faserendhülsen einen definierten Abstand (C) aufweisen.

2. Optischer Steckverbinder nach Anspruch 1, **dadurch gekennzeichnet, dass** das Halterungsteil (10) in ein Gehäuse (20) einfügbar ist.

3. Optischer Steckverbinder nach einem der vorstehenden Ansprüche, **dadurch gekennzeichnet,**
**dass** das Halterungsteil (10) mit Kodiermitteln versehen ist, die als Querrippen (13, 13') ausgebildet sind, die in Ausnehmungen (36, 35) in den Faserendhülsen (3, 3') eingreifen.

4. Optischer Steckverbinder nach einem der vorstehenden Ansprüche, **dadurch gekennzeichnet,**
**dass** das Halterungsteil (10) und das Gehäuse (20) Polarisationsmittel (17) aufweisen.

5. Optischer Steckverbinder nach einem der vorstehenden Ansprüche, **dadurch gekennzeichnet,**
**dass** das Halterungsteil (10) und das Gehäuse (20) mit Rastmitteln versehen sind, wobei das Halterungsteil (10) an den Schmalseiten jeweils zwei in Einschubrichtung hintereinander, beabstandet angeordnete Rastnasen (14, 15) aufweist, die in Ausnehmungen (23) im Gehäuse (20) greifen, wobei beim Einschieben die ersten Rastnasen (14) eine Vorverrastung zwischen dem Halterungsteil und dem Gehäuse bewirken und wobei beim weiteren Einschieben die zweiten Rastnasen (15) in die Ausnehmungen (23) gelangen und das Halterungsteil und das Gehäuse endgültig miteinander verrasten.

6. Optischer Steckverbinder nach einem der vorstehenden Ansprüche, **dadurch gekennzeichnet,**
**dass** an dem Gehäuse (20) ein Rastmittel mit einem Verrastungsblock (25) vorgesehen ist, der in eine Ausnehmung (19) im Halterungsteil (10) eingreift, wobei der Verrastungsblock mittels Filmscharnieren (28) am Gehäuse (20) gehalten ist.
